# EUROPEAN PATENT APPLICATION

(11) **EP 1 251 679 A1**
(43) Date of publication of application: **23.10.2002**
(21) Application number: 01303387.3
(22) Date of filing: 11.04.2001
(51) Int. Cl.: H04M 3/20, H04M 3/42

(54) **Call override (interrupt, break-in) on busy function with PIN controlled access**

(71) Applicant: LUCENT TECHNOLOGIES INC., Murray Hill, New Jersey 07974-0636 (US)
(72) Inventor: Thomasse, Bart, Amersfoort 3812HX (NL)
(74) Representative: Sarup, David Alexander

(57) **Abstract**

Data communication system comprising communication units and at least one public Voice and/or Data Switch for establishing at least a first communication link between a first communication unit of the data communication system and a second communication unit of the data communication system, wherein the data communication system is arranged such that at least one third communication unit of the data communication system can break-in into the first communication link.

Call scenario:
Caller A calls caller B and a call is set up between A and B. If a caller C now rings A, caller C can, using a previously defined PIN code, activate an override feature resulting in two call situations:
1)conference call between the parties A, B and C
2)one-on-one call between the parties A and C.
Avoids call waiting queue for certain privileged callers which have previously defined PIN codes by the called subscriber.

## Description

The invention relates to a data communication system comprising communication units and at least one public Voice and/or Data Switch for establishing at least a first communication link between a first communication unit of the data communication system and a second communication unit of the data communication system.

The above-mentioned data communication system is known in actual practice. Mostly, the public Voice and Data Switch will be a public telephone exchange. With the data communication system a first user of the first communication unit can give a call via the first communication unit to a second user of the second communication unit. For this, the data communication system establishes the first communication link between the first communication unit.

A disadvantage of the known data communication system is that a third user of a third communication unit is neither able to establish a communication link with the first communication unit nor with the second communication unit after and as long as the first communication link is established. If the third user still tries to establish a second communication link with (for example) the second communication unit the following situation may arise. The data communication system places the second communication link in a so-called Call Waiting queue for the second communication unit. Subsequently the data communication system transmits acoustic peep signals (or other visible and/or audible signals) to the second communication unit to inform the second user that the second communication link has been placed in the Call Waiting queue. This queue may be situated in the at least one Voice and/or Data Switch. Next, it is up to the second user to switch to the second communication link in the queue.

The procedure described hereinbefore is a very cumbersome way of establishing a communication link between the third communication unit and either the second communication unit or (in an analogous way) the first communication unit.

It is an object of the invention to meet said disadvantage of the known data communication system. This is achieved with the data communication system of the invention which is characterised in that the data communication system is arranged such that at least one third communication unit of the data communication system can break-in into the first communication link. Herewith the third communication unit can establish a communication link either with the first communication unit or with the second communication unit. Next, the third user can directly communicate with the first user or with the second user.

An embodiment of the data communication system according to the invention is characterised in that the data communication system is arranged such that the at least one third communication unit can only break-in into the first communication link by entering a pre-determined personal identification code with respect to the first communication unit or the second communication unit into the at least one Voice and/or Data Switch. In this way it is prevented that the respective first and second users of the respective first and second communication units will be disturbed to frequently while communicating via the first communication link. Preferably the predetermined personal identification code with respect to the first communication unit is established by the first user and is changeable by the first user. In an analogous way, the predetermined personal identification code with respect to the second communication unit is established by the second user and is changeable by the second user. Consequently, any user who knows the predetermined personal identification code with respect to the first communication unit can break-in into any communication link with the first communication unit and any user who knows the predetermined personal identification code with respect to the second communication unit can break-in into any communication link with the second communication unit. Thus, in this embodiment, the authorisation of the break-in function is user-oriented.

Another embodiment of the data communication system according to the invention is characterised in that the data communication system comprises a pre-determined group of third communication units which can break-in into the first communication link. In this embodiment there is no need for a personal identification code since the authorisation of the break-in function is communication unit-oriented. Preferably, the at least one public Voice and/or Data Switch at least comprises a list of authorised communication units related to a communication unit with respect to the break-in function. The list can for example be updated by the operator of the at least one public Voice and Data Switch.

In the accompanying drawings, in which several modes of carrying out the present invention are shown for illustrative purposes:
Fig. 1 is a diagram schematically showing a first public data communication system according to the invention; and
fig. 2 is a diagram schematically showing a second public data communication system according to the invention.

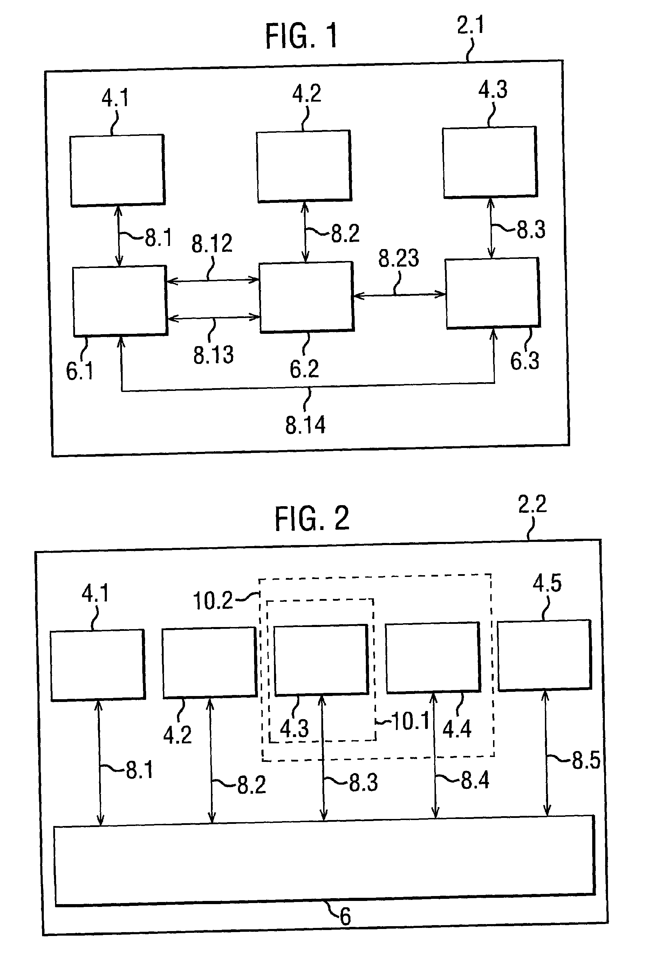

Figure 1 schematically shows a public data communication system 2.1 which comprises communication units 4.1, 4.2 and 4.3 and Public Voice and/or Data Switches exchanges 6.1, 6.2 and 6.3. In the example of figure 1 the Voice and/or Data Switches are public telephone exchanges. Furthermore, the first communication unit 4.1 is used by a first user, the second communication unit 4.2 is used by a second user and the third communication unit 4.3 is used by a third user. However, this choice has been made only in order to present a clear example. It is noted that in practice any user can use any communication unit. The data communication system 2.1 can establish a first communication link 8.1, 8.12, 8.2 between the first communication unit 4.1 and the second communication unit 4.2 upon initialisation of the first communication unit 4.1. The first communication link comprises a sublink 8.1 between the first communication unit 4.1 and the telephone exchange 6.1, a sublink 8.12 between the telephone exchanges 6.1 and 6.2 and a sublink 8.2 between the telephone exchange 6.2 and the communication unit 4.2. The first and the second user can communicate with each other via the first communication link.

The data communication system 2.1 is arranged such that the third communication unit 4.3 can break-in into the first communication link 8.1, 8.12, 8.2. In principle this can be performed by the third communication unit 4.3 in two ways (to be selected by the third user via the third communication unit 4.3). The first way is a situation wherein the third communication unit 4.3 establishes a communication link 8.3, 8.14, 8.1 (or: 8.3, 8.23, 8.13, 8.1) with the first communication unit 4.1. The second way is a situation wherein the third communication unit 4.3 establishes a communication link 8.3, 8.23, 8.2 with the second communication unit 4.2. This results, in this example, at least initially, in a telephone conversation between the communication units 4.1, 4.2 and 4.3 (in particular between their users) after the break-in via the communication unit 4.3. However, it is equally possible that after the break-in via communication unit 4.3 a one-to-one conversation between units 4.1 and 4.3 [excluding 4.2] results or that a one-to-one conversation between units 4.2 and 4.3 [excluding 4.1] results.

More in particular, the data communication system 2.1 is arranged such that the third communication unit 4.3 can only break-in into the first communication link 8.1, 8.12, 8.2 by entering a pre-determined personal identification code with respect to the first communication unit 4.1 (see the first situation as explained below) or the second communication unit 4.2 (see the second situation as explained below) into the at least one Voice and/or Data Switch. This will be elucidated with the following:

In the first situation the third user calls the first user. For this the data communication system 2.1 tries to set up the second communication link 8.3, 8.14, 8.1 (or: 8.3, 8.23, 8.13, 8.1) with the first communication unit 4.1. It then appears that the first communication unit 4.1 has been connected to the second communication unit via the first communication link 8.1, 8.12, 8.2. This is detected by the telephone exchange 6.1. Next, the telephone exchange 6.1 transmits a signal to the third communication unit 4.3 indicating that communication unit 4.1 is in a so-called talking state. Then two cases have to be distinguished.

In the first case the third user is unknown of the personal identification code with respect to the first communication unit 4.1. In this situation the third user has to disconnect the communication link to the telephone exchange 6.1 or to request the telephone exchange 6.1 to put the communication link to the first communication unit 4.1 in a call waiting queue.

In the second case the third user knows the personal identification code with respect to the first communication unit 4.1. Then, the third user can enter this personal identification code into the third communication unit 4.3 which transmits this code via the communication link 8.3, 8.14 (or: 8.3, 8.23, 8.13) to the telephone exchange 6.1. Subsequently, the telephone exchange 6.1 will check this code with a stored reference code and establish the sublink 8.1 with the first communication unit 4.1 after approval. The stored reference code can for example be stored in memory means in the telephone exchange 6.1 (which is situated closest to communication unit 4.1) such that the telephone exchange 6.1 can compare the transmitted code by communication unit 4.3 with the reference code.

In this way two simultaneous communication links 8.1, 8.12, 8.2 and 8.3, 8.14, 8.1 (or: 8.3, 8.23, 8.13, 8.1) are established (for example resulting in a kind of conference mode) by the data communication system 2.1. In this manner each user which knows the personal identification code with respect to the first communication unit 4.1 can always reach the user of the first communication unit 4.1.

In the second situation the third user of the communication unit 4.3 calls the user of the second data communication unit 4.2. Then (analogous to the first situation) a communication link 8.3, 8.23 is established. Next, the telephone exchange 6.2 transmits a signal to the third communication unit 4.3 indicating that communication unit 4.2 is in a talking state. It is the up to the third user to enter a personal identification code with respect to the second communication unit for establishing a communication link 8.3, 8.23, 8.2.

It is pointed out here that, although in the example of figure 1 three telephone exchanges are depicted, it is equally possible to have two or even just one telephone exchange which performs comparably with the telephone exchanges 6.1, 6.2 and 6.3.

Figure 2 schematically shows a public data communication system 2.2 which comprises respective communication units 4.i which are connected via respective sublinks 8.i (i=1,.., 5) to the elephone exchange 6. (The data communication system of figure 2 only shows one public telephone exchange. However, more telephone exchanges and/or a network of inter-connected telephone exchanges are equally possible). In this example the communication unit 4.i is used by the i^{th} user (i=1,...,5).

The data communication system 2.2 can establish a first communication link 8.1, 8.2 between the first communication unit 4.1 and the second communication unit 4.2 upon initialisation of the first communication unit 4.1. The first communication link comprises sublink 8.1 and sublink 8.2.

The data communication system 2.2 comprises a first collection of communication units 10.1 and a second collection of communication units 10.2. In this example the first collection comprises the communication unit 4.3 and the second collection comprises the communication units 4.3 and 4.4. The data communication unit 4.5 is neither divided into the first collection nor into the second collection. The data communication system 2.2 is arranged such that each data communication unit in the first collection 10.1 (here: communication unit 4.3) can break-in into each communication link with the first communication unit 4.1 and that each data communication unit in the second collection 10.2 (here: communication units 4.3 and 4.4) can break-in into each communication link with the second communication unit 4.2. Thus with respect to the data communication system 2.2: The communication units 4.3 and 4.4 belong to the pre-determined group of third communication units which can break-in into the first communication link 8.1, 8.2. The communication unit 4.5 is not able to break-in into the first communication link 8.1, 8.2.

The communication unit 4.3 (divided both in the first collection and the second collection) can break-in into the first communication link in two ways. The first way is when the third user calls the first user via the third communication unit 4.3. Then the telephone exchange 6 establishes a second communication link 8.3, 8.1 such that the first user and the third user can communicate. The overall result is that a first communication link 8.1, 8.2 and a second communication link 8.1, 8.3 are established. These communication can be simultaneous communication links. The second way for the third user to break-in into the first communication link is to call the second user via the third communication unit.

The fourth communication unit 4.4 (divided into the second collection) can only break-in into the first communication link by calling the second communication unit 4.2. The overall result in this case is that two simultaneous communication links 8.1, 8.2 and 8.4, 8.2 are established.

The classification of communication units into collections and groups is dynamical and can for example be changed by the operator of the telephone exchange 6. Herewith the telephone exchange can maintain lists with communication units which are divided into a certain groups or collection. In the example of figure 2 it would be possible to put the fifth communication unit 4.5 on the list of the first collection. After this has been performed the fifth communication unit 4.5 will be able to break-in into the first communication unit by calling the first communication unit 4.1. Thus in that case the unit 4.5 belongs to the pre-determined group of third communication units.

Moreover, it is noted that the data communication system can comprise a wireless mobile data communication network comprising at least one of said communication units and/or a fixed data communication network comprising at least one of said communication units.

The present invention has been described in what is considered to represent its preferred embodiments. However, it should be noted that the invention can be practised otherwise than as specifically illustrated and described without departing from its spirit or scope. For example, the data communication system can comprise a digital highway for internet applications, wherein the data communication links are used for transferring digital data packages with priority to specified internet addresses. In such a case it is possible that an internet session of a user of a data communication system is interrupted by a Voice call of another use of the data communicaton system. The bandwidth of the system is then divided over different users by said Voice and/or Data Switch.

## Claims

1. Data communication system comprising communication units and at least one public Voice and/or Data Switch for establishing at least a first communication link between a first communication unit of the data communication system and a second communication unit of the data communication system, **characterised in that**, the data communication system is arranged such that at least one third communication unit of the data communication system can break-in into the first communication link.

2. Data communication system according to claim 1, **characterised in that**, the data communication system is arranged such that the at least one third communication unit can only break-in into the first communication link by entering a pre-determined personal identification code with respect to the first communication unit or the second communication unit into the at least one Voice and/or Data Switch.

3. Data communication system according to claim 1, **characterised in that**, the data communication system comprises a pre-determined group of third communication units which can break-in into the first communication link.
